# EUROPÄISCHE PATENTSCHRIFT

(11) **EP 0 423 533 B1**
(45) Veröffentlichungstag und Bekanntmachung des Hinweises auf die Patenterteilung: **12.05.1993**
(21) Anmeldenummer: 90118833.4
(22) Anmeldetag: 02.10.1990
(51) Int. Cl.: G01D 5/26

(54) **Herstellung eines Teilungsträgers aus Kunststoff mit einer Teilungstruktur**
Manufacturing of measuring-scale support with a scale structure made out of plastic material
Production d'un support d'échelle avec structure d'échelle faite en matériau plastique

(30) Priorität: 14.10.1989 DE 3934339
(43) Veröffentlichungstag der Anmeldung: 24.04.1991
(73) Patentinhaber: Dr. Johannes Heidenhain GmbH, D-83292 Traunreut (DE)
(72) Erfinder: Kraus, Heinz, W-8225 Traunreut (DE)

(56) Entgegenhaltungen:
- EP-A- 0 220 757
- US-A- 4 193 199
- US-A- 4 806 751

## Beschreibung

Die Erfindung betrifft die Herstellung eines Teilungsträgers aus Kunststoff mit einer Teilungsstruktur, insbesondere für eine lichtelektrische Positionsmeßeinrichtung.

Eine derartige Positionsmeßeinrichtung dient zum Messen der Relativlage zweier zueinander beweglicher Objekte, beispielsweise zweier Maschinenteile einer Werkzeugmaschine zum Positionieren eines Werkzeugs bezüglich eines zu bearbeitenden Werkstücks. Zu diesem Zweck ist das eine Objekt mit dem Teilungsträger verbunden, dessen Teilungsstruktur von einer mit dem anderen Objekt verbundenen Abtasteinheit abgetastet wird.

Aus der US-A-4,806,751 ist für eine Winkelmeßeinrichtung ein kreisförmiger Teilungsträger aus Kunststoff mit einer Nabe bekannt, auf dem konzentrisch eine Teilungsstruktur in Form einer mit Aussparungen versehenen Metallscheibe im Mittenbereich durch Kleben befestigt ist; im Außenbereich mit den Aussparungen sind der Teilungsträger und die Metallscheibe voneinander beabstandet. Dieser Teilungsträger mit der nur groben Teilungsstruktur ist im Aufbau und in der Herstellung relativ aufwendig.

Aus der EP-A-0 220 757 ist ein Teilungsträger bekannt, dessen Gitterstruktur in Form einer eigenen Lamelle an einem Träger gestaltet ist.

Der Erfindung liegt die Aufgabe zugrunde, bei einem Teilungsträger aus Kunststoff mit einer Teilungsstruktur deren Aufbau und Herstellung wesentlich zu vereinfachen.

Diese Aufgabe wird erfindungsgemäß durch die kennzeichnenden Merkmale des Patentanspruchs 1 gelöst.

Die mit der Erfindung erzielten Vorteile bestehen insbesondere darin, daß durch die formschlüssige Integration der Teilungsstruktur im Teilungsträger aus Kunststoff der Aufbau und die Herstellung im Gußverfahren oder im Spritzgußverfahren wesentlich vereinfacht und damit verbilligt werden. Eine besonders wirtschaftliche Herstellung ergibt sich durch die Verwendung von Gußformen mit Mehrfachnutzen. Die optischen Eigenschaften (Absorption, Reflektivität) der Teilungsstruktur sind vielfältig variierbar. Es lassen sich je nach der Ausführungsform Teilungsstrukturen mit einer Auflösung bis zum Submikron-Bereich herstellen.

Vorteilehalfe weitere Ausbildung der Erfindung entnimmt man dem abhängigen Patentanspruch 2.

Ausführungsbeispiele der Erfindung werden anhand der Zeichnung näher erläutert.

Es zeigen
- Figur 1a: einen ersten Teilungsträger mit einer Teilungsstruktur im Querschnitt und
- Figur 1b: in einer Draufsicht;
- Figur 2: die Herstellungsphasen eines zweiten Teilungsträgers mit einer Teilungsstruktur;
- Figur 3: die Herstellungsphasen eines dritten Teilungsträgers mit einer Teilungsstruktur;
- Figur 4: die Herstellungsphasen eines vierten Teilungsträgers mit einer Teilungsstruktur;
- Figur 5: die Herstellungsphasen eines fünften Teilungsträgers mit einer Teilungsstruktur.

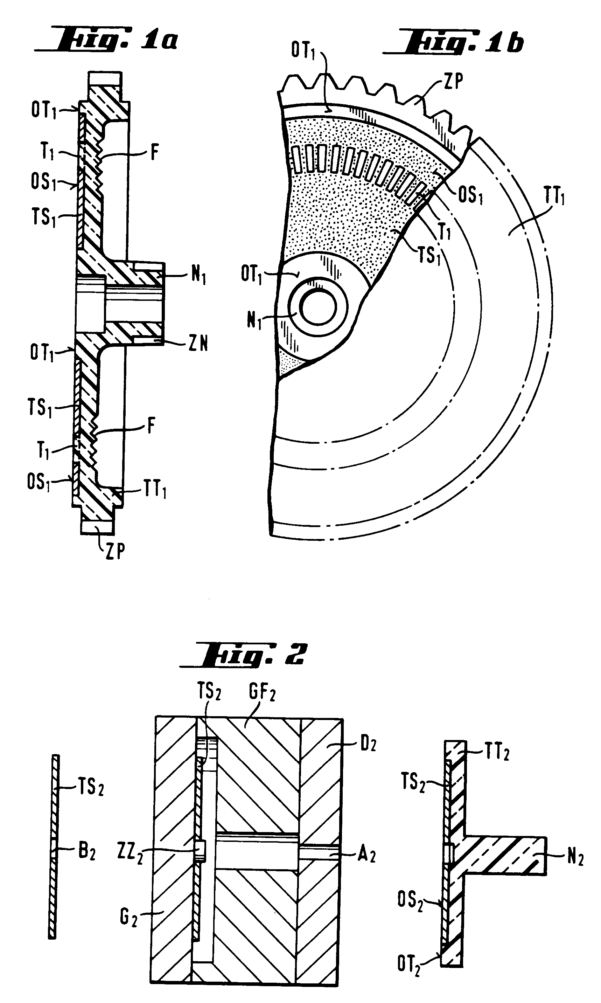

In Figur 1a ist im Querschnitt ein erster kreisförmiger Teilungsträger TT₁ aus Kunststoff mit einer angegossenen Hohlnabe N₁ gezeigt, der in Figur 1b in einer Draufsicht dargestellt ist. Auf der freien Oberfläche OT₁ des ersten Teilungsträgers TT₁ ist eine Teilungsstruktur TS₁ als gesondert vorgefertigte Lamelle formschlüssig im ersten Teilungsträger TT₁ integriert, wobei die freie Oberfläche OT₁ des ersten Teilungsträgers TT₁ und die freie Oberfläche OS₁ der Teilungsstruktur TS₁ in einer Ebene liegen. Die Teilungsstruktur TS₁ weist eine inkrementale oder absolute Teilung T₁ auf, die in bekannter Weise aus lichtdurchlässigen Teilungsstrichen und lichtundurchlässigen Teilungsstrichen besteht.

Der erste Teilungsträger TT₁ mit der Teilungsstruktur TS₁ wird beispielsweise bei einer lichtelektrischen Winkelmeßeinrichtung zur Messung der Relativlage zweier gegeneinander verschiebbarer Objekte, beispielsweise eines Schlittens bezüglich des Bettes einer nicht gezeigten Bearbeitungsmaschine eingesetzt. Zu diesem Zweck ist die Hohlnabe N₁ des ersten Teilungsträgers TT₁ mit einer Verstellspindel für den Schlitten verbunden und eine mit dem Bett verbundene nicht dargestellte Abtasteinheit der Winkelmeßeinrichtung tastet im Auflicht oder im Durchlicht die inkrementale oder absolute Teilung T₁ zur Gewinnung von Meßwerten für die Relativlage der beiden Objekte ab. Auf der der inkrementalen Teilung T₁ gegenüberliegenden Oberfläche des transparenten Teilungsträgers TT₂ kann eine optisch wirksame Struktur, beispielsweise in Form eines Fresnelschen Zonenringes F, vorgesehen sein. Neben der Nabe N₁ und dem Fresnelschen Zonenring F sind als weitere Funktionselemente eine Verzahnung ZN an der Nabe N₁ und eine Verzahnung ZP an der Peripherie des ersten Teilungsträgers TT₁ vorgesehen.

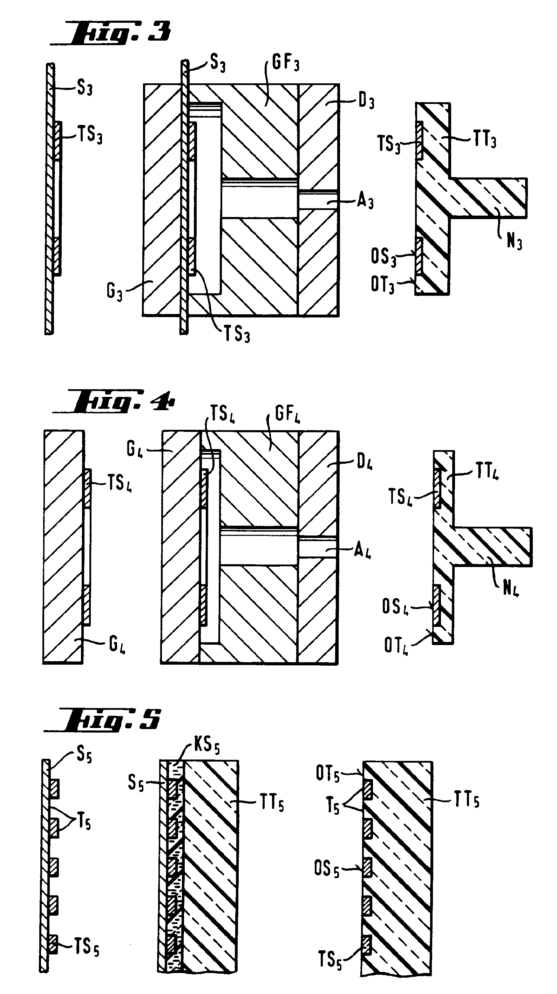

In Figur 2 sind von links nach rechts die Herstellungsphasen eines zweiten kreisformigen Teilungsträgers TT₂ aus Kunststoff mit einer Teilungsstruktur TS₂ im Querschnitt gezeigt. Die als Lamelle gesondert vorgefertigte Teilungsstruktur TS₂ in Form eines Formätzteils mit einer Zentrierbohrung B₂ (links) wird auf einer Grundplatte G₂ einer Gußform GF₂ mittels eines Zentrierzapfens ZZ₂ zentriert angeordnet. Durch eine Angußbohrung A₂ im Deckel D₂ der Gußform GF₂ wird der flüssige transparente Kunststoff für den Druckguß zugeführt (Mitte). Nach dem Erkalten des Kunststoffes wird die Grundplatte G₂ entfernt und der fertige Teilungsträger TT₂ aus Kunststoff mit der Teilungsstruktur TS₂ und einer angegossenen Nabe N₂ entnommen (rechts). Die Teilungsstruktur TS₂ ist formschlüssig und lagestabil im Teilungsträger TT₂ integriert, wobei die Oberfläche OS₂ der Teilungsstruktur TS₂ und die Oberfläche OT₂ des Teilungsträgers TT₂ in einer Ebene liegen.

In Figur 3 sind von links nach rechts die Herstellungsphasen eines dritten kreisförmigen Teilungsträgers TT₃ aus Kunststoff mit einer Teilungsstruktur TS₃ im Querschnitt gezeigt. Die auf einem Stahlblech S₃ als Lamelle gesondert vorgefertigte Teilungsstruktur TS₃ in Form einer Nickel-Galvanoplastik (links) wird auf einer Grundplatte G₃ einer Gußform GF₃ zentriert angeordnet; die Zentrierung erfolgt in nicht gezeigter Weise außerhalb der Gußform GF₃. Durch eine Angußbohrung A₃ im Deckel D₃ der Gußform GF₃ wird der flüssige transparente Kunststoff für den Druckguß zugeführt (Mitte). Nach dem Erkalten des Kunststoffes wird die Grundplatte G₃ entfernt und der fertige Teilungsträger TT₃ aus Kunststoff mit der Teilungsstruktur TS₃ und einer angegossenen Nabe N₃ entnommen; sodann wird das Stahlblech S₃ abgezogen (rechts). Die Teilungsstruktur TS₃ ist formschlüssig und lagestabil im Teilungsträger TT₃ integriert, wobei die Oberfläche OS₃ der Teilungsstruktur TS₃ und die Oberfläche OT₃ des Teilungsträgers TT₃ in einer Ebene liegen.

In Figur 4 sind von links nach rechts die Herstellungsphasen eines vierten kreisförmigen Teilungträgers TT₄ aus Kunststoff mit einer Teilungsstruktur TS₄ im Querschnitt gezeigt. Auf einer Grundplatte G₄ einer Gußform GF₄ wird als Lamelle eine Teilungsstruktur TS₄ in Form einer Gold-Galvanoplastik gesondert vorgefertigt (links). Anschließend wird die Grundplatte G₄ an der Gußform GF₄ befestigt, wobei die Teilungsstruktur TS₄ eine zentrierte Lage einnimmt. Durch eine Angußbohrung A₄ im Deckel D₄ der Gußform GF₄ wird der flüssige transparente Kunststoff für den Druckguß zugeführt (Mitte). Nach dem Erkalten des Kunststoffes wird die Grundplatte G₄ entfernt und der fertige Teilungsträger TT₄ aus Kunststoff mit der Teilungsstruktur TS₄ und einer angegossenen Nabe N₄ von der Grundplatte G₄ abgezogen (rechts). Die Teilungsstruktur TS₄ ist formschlüssig und lagestabil im Teilungsträger TT₄ integriert, wobei die Oberfläche OS₄ der Teilungsstruktur TS₄ und die Oberfläche OT₄ des Teilungsträgers TT₄ in einer Ebene liegen.

In Figur 5 sind von links nach rechts die Herstellungsphasen eines fünften stabförmigen Teilungsträgers TT₅ aus Kunststoff mit einer Teilungsstruktur TS₅ im Querschnitt gezeigt. Auf einem Stahlblech S₅ wird eine Teilungsstruktur TS₅ mit einer Teilung T₅ als Lamelle gesondert vorgefertigt (links). Auf eine Oberfläche des vorgeformten Teilungsträgers TT₅ aus Kunststoff werden eine aushärtbare Kunststoffschicht KS₅ und darauf die Teilungsstruktur TS₅ aufgebracht (Mitte). Nach dem Aushärten der Kunststoffschicht KS₅ in einer nicht gezeigten Druckform wird das Stahlblech S₅ abgezogen (rechts). Die Teilungsstruktur TS₅ mit einer Teilung T₅ ist formschlüssig und lagestabil im Teilungsträger TT₅ integriert, wobei die Oberfläche OS₅ der Teilungsstruktur TS₅ und die Oberfläche OT₅ des Teilungsträgers TT₅ in einer Ebene liegen. Nach dem Aushärten besteht zwischen der Kunststoffschicht KS₅ und dem Teilungsträger TT₅ keine Grenzfläche mehr. Dieser stabformige Teilungsträger TT₅ mit der Teilungsstruktur TS₅ wird in einer nicht gezeigten Längenmeßeinrichtung eingesetzt.

Die Teilungsstruktur TS kann auch aus einem Stanzteil oder aus einem mittels Laserstrahl schmelzperforierten Teil bestehen.

## Patentansprüche

1. Verfahren zur Herstellung eines Teilungsträgers (TT) aus Kunststoff mit einer Teilungsstruktur (TS), insbesondere für eine lichtelektrische Positionsmeßeinrichtung, dadurch gekennzeichnet, daß im Gußverfahren oder im Spritzgußverfahren die Teilungsstruktur (TS) als gesondert vorgefertigte Lamelle in die Gußform (GF) eingebracht und durch den Gußprozess formschlüssig und lagestabil integrierender Bestandteil des Teilungsträgers (TT) wird.

2. Verfahren zur Herstellung eines Teilungsträgers (TT₅) nach Anspruch 1, dadurch gekennzeichnet, daß auf den Teilungsträger (TT₅) aus Kunststoff eine aushärtbare Kunststoffschicht (KS₅) und darauf eine Teilungsstruktur (TS₅) als gesondert vorgefertigte Lamelle aufgebracht werden und daß die Teilungsstruktur (TS₅) nach einem Druckprozess formschlüssig und lagestabil integrierender Bestandteil des Teilungsträgers (TT₅) wird.

## Claims

1. A method of manufacturing a graduation carrier (TT) of plastics material with a graduation structure (TS), especially for a photoelectric position measuring device, characterized in that the graduation structure (TS) is placed as a separately preformed layer in the mould (GF) in the casting method or the injection moulding method and becomes a positively engaged and positionally stable integrated component of the graduation carrier (TT) through the casting/moulding process.

2. A method of manufacturing a graduation carrier (TT₅) according to claim 1, characterized in that a hardenable plastics layer (KS₅) is applied to the graduation carrier (TT₅) of plastics material and a graduation structure (TS₅) is applied thereon as a separately preformed layer and in that the graduation structure (TS₅) becomes a positively engaged and positionally stable integrated component of the graduation carrier (TT₅) after a pressing process.

## Revendications

1. Procédé de fabrication d'un support de graduation (TT) en matière plastique comportant une structure de graduation (TS) et destiné en particulier à un dispositif de mesure de position photo-électrique, caractérisé par le fait que l'on place dans le moule (GF) la structure de graduation (TS) qui se présente sous la forme d'une lamelle préfabriquée séparément par moulage par gravité ou par moulage sous pression et que celle-ci, par le processus de moulage, devient partie intégrante, par liaison par obstacle et avec une position fixe, du support de graduation (TT).

2. Procédé de fabrication d'un support de graduation (TT₅) selon la revendication 1, caractérisé par le fait que l'on applique sur le support de graduation (TT₅) en matière plastique une couche (KS₅ )de matière plastique durcissable et, sur celle-ci, une structure de graduation (TS₅) qui se présente sous la forme d'une lamelle préfabriquée séparément et que, par un processus d'application de pression, la structure de graduation (TS₅) devient partie intégrante, par liaison par obstacle et avec une position fixe, du support de graduation (TT₅).
